# NEW EUROPEAN PATENT SPECIFICATION

(11) **EP 0 916 709 B2**
(45) Date of publication and mention of the opposition decision: **17.02.2010**
(45) Mention of the grant of the patent: 26.05.2004
(21) Application number: 98308757.8
(22) Date of filing: 27.10.1998
(51) Int. Cl.: C09D 163/00, C09D 5/03, C08G 59/18

(54) **A one-component, low temperature curable coating powder**
Bei niedriger Temperatur härtbare Einkomponenten-Pulverbeschichtungszusammensetzung
Revêtement sous forme de poudre à un composant durcissable à basse température

(30) Priority: 04.11.1997 US 964242; 07.07.1998 US 111419
(43) Date of publication of application: 19.05.1999
(73) Proprietor: MORTON INTERNATIONAL, INC., Chicago, Illinois 60606 (US)
(72) Inventor: Muthiah, Jeno, Wernesville, Pennsylvania 19565 (JP); Teti, Jeremiah J., Reading, Pennsylvania 19606 (JP); Schlessman, Jacquelyn M., Temple, Pennsylvania 19560 (JP)
(74) Representative: Bankes, Stephen Charles Digby

(56) References cited:
- EP-A- 0 806 445
- EP-A- 0 806 459
- GB-A- 1 583 539
- GB-A- 2 118 188
- US-A- 4 757 117
- US-A- 5 414 058
- US-A- 5 686 185

## Description

### BACKGROUND OF THE INVENTION

This invention relates to a powder coating system in which a mixture of an epoxy resin and a low temperature curing agent is extruded as one component and pulverized to form a low temperature curable coating powder. The powder cures at a temperature of from 107 to 149°C 225 to 300°F and produces a coating having an exceptionally smooth surface with either a low or high gloss. This invention also relates to the electrostatic coating of massive metal articles and wood and low temperature curing to achieve a pleasing smoothness. It also relates to a method for compounding a coating powder by extruding a mixture comprising an epoxy resin having a low melt viscosity and a low temperature curing agent at a temperature of from about 160°F to about 220°F (about 71-104°C).

Traditionally, coating powders have been made by the extrusion of a mixture of resins and curing agents to obtain a homogeneous mixture and then grinding the extrudate and screening the comminuted product to obtain the desired particle sizes and particle size distribution. The powder is then electrostatically sprayed onto a substrate, traditionally a metal substrate, and cured at temperatures much higher than 93°C (200°F). Achieving a powder coating composition that will cure on heat sensitive substrates at less than 149°C (300°F) in less than 5 minutes has long been a goal of the industry. The curing of powder coatings on materials such as wood, plastic, and the like has been limited by the fact that the extrusion of a mixture of a resin and a low temperature curing agent, i.e., one that is active at 121°C (250°F) or less, would cause the coating powder to gel in the extruder because the extrusion typically generates enough heat to raise the temperature to 93°C (200°F) or higher.

This problem has been avoided by extruding the resin and a small amount of catalyst or low temperature curing agent, grinding the extrudate, and then blending the resultant powder with an additional amount of the curing agent in powder form, according to the disclosure in co-pending, commonly assigned application EP-A-806445.

The high temperatures that are generated by the extrusion of a curing agent with a resin are caused in part by the fact that the temperature must be sufficient to facilitate the mixing of resins having initially high melt viscosities. Even higher temperatures are produced by the friction arising from the mixing of the still highly viscous molten resins with curing agents that are solid at room temperature.

Douglas S. Richart said in his article published in the April, 1996 issue of POWDER COATINGS, that the coating of wood with a low temperature cure powder is next to impossible because the coating must be cured at a temperature below 93°C (200°F) and the resin must have a flow temperature of 5.5 to 11°C (10 to 20 °F) lower than that. Resins having lower melt viscosities, however, generally have lower glass transition temperatures. Thepresence of a resin having a very low T_{g} in the powdered extrudate increases the tendency to sinter and thus decreases the blocking resistance of the powder during storage at the normal maximum temperature of about 80°F (27°C).

It is an object of this invention, therefore, to provide a method for extruding a one-component low temperature curable coating powder.

It is a related object of this invention to provide a one-component low temperature curable coating powder that has satisfactory blocking resistance during storage at normal temperatures.

It is a further object of this invention to provide such a coating powder for heat sensitive substrates and massive metal articles.

It is another object of this invention to provide a low temperature process for producing a smooth, high gloss coating on wood.

The present invention consists in a method for preparing a one-component thermosetting coating powder which comprises extruding, at a temperature of not more than 104.5°C (220°F), a mixture of an epoxy resin having a melt viscosity of from 0.2 to 2.0 Pas (200 to 2000 centipoise) at 150°C and a low temperature curing agent which is solid at 27°C (80°F) and which is an epoxy resin adduct of a polyamine, cooling the extrudate, and comminuting it, characterised in that the epoxy resin is a mixture of one having an equivalent weight between 100 and 400 and one having an equivalent weight between 400 and 700 in a weight ratio of from 1:99 to 99:1.

For the purpose of describing the proportions of components in the compositions of this invention, the term resin includes the resin *per se* and the curing agent but not the catalyst. Also, the term "one component coating powder" means that the powder is fully formed by grinding and screening only one extrudate of a mixture of the resin, curing agent, catalyst, and additives.

Epoxy resins which are suitable for the purposes of this invention have an equivalent weight of from 100 to 700. The resins are exemplified by, but not limited to, those produced by the reaction of epichlorohydrin and a bisphenol, e.g., bisphenol A and bisphenol F. The low melt viscosities of these resins facilitate the extrusion of them in admixture with a curing agent, additives and pigments at 71-104.5°C (160-220°F). The preferred melt viscosity is from 0.3-1.0Pas (300 to 1000 centipoise). The melt viscosity of resins having a low T_{g}, i.e., from 35°C to 55°C, is suitable for the purposes of this invention. Epoxy resins known as EPN (epoxy phenol novolac) and ECN (epoxy cresol novolac) resins and those made by the reaction of isopropylidenediphenol (bisphenol A) with epichlorohydrin are suitable for the purposes of this invention. Bisphenol A epoxies are sold under the trademarks ARALDITE GT-7071, GT-7072, EPON 1001 and EPON 2042. ARALDITE GT-6259 is the trademark for an ECN resin.

The use of a crystalline epoxy may improve the flow characteristics of the fused coating powder. A particularly desirable flow is achieved when a crystalline epoxy constitutes from 5 to 20 % by weight of the total amount epoxy resin used in the formulation of the powder. The performance of a coating powder of this invention deteriorates as the level of crystalline epoxy resin therein is increased because of the relatively low equivalent weights of such resins and the preferred amount of such a resin is 10% or less for that reason. A crystalline epoxy resin having a melting point between 80°C and 150°C is preferred. A crystalline epoxy resin having an equivalent weight of about 185 and sold by Shell under the trademark RSS 1407 is suitable for the purposes of this invention.

When resins having a T_{g} of from 35°C to 40°C, are used in this invention, sintering of the powder is avoided by allowing the temperature in the extruder to rise to activate the low temperature curing agent for a time sufficient to raise the extrudate's viscosity beyond the sintering point and then cooling the extrudate rapidly to 10-20°C (50-70°F) before chipping and grinding it and storing the powder at such temperature to avoid a further viscosity build-up by continued curing. Another way to avoid sintering of the powder when low T_{g} resins are used is to pre-mix the resin with a crystalline or non-crystalline curing agent powder having an average particle size of about 5 microns that does not liquefy in the extruder. The powdered agent does not react with the resin so readily as does the same curing agent in flake form. A specific example of a curing agent that may so used in the powdered form is sold under the trademark ANCAMINE 2441.

The low temperature curing agent of this invention is one that will be active at a temperature of from 107 to 149°C (225 to 300°F) and is an epoxy adduct of an aliphatic polyamine (including cycloaliphatic polyamines) which may have a primary, secondary, or tertiary amino group or a combination of such amino groups. Examples of such curing agents include hardeners sold under the trademarks PF LMB 5218 (Ciba Ceigy), ANCAMINE 2337 XS, ANCAMINE 2014 AS, and ANCAMINE 2441 (Air Products & Chemicals). An epoxy adduct of an aromatic polyamine, such as methylene dianiline, is also a suitable curing agent for the purposes of this invention. It is preferred that the functionality of the adducting reaction mixture is 2 or less and it is particularly preferred to use a difunctional epoxy compound. The amount of low temperature curing agent is from 2 to 40 parts per hundred parts of the resin (phr) and the preferred amount is from 5 to 20 phr. Increasing levels of the curing agent reduce the gel time and, therefore, increase the orange peel effect.

A catalyst may be used at a level of from 0.1 to 5 parts per hundred parts of the resin, preferably 0.2 -2 phr to accelerate the curing reaction with the low temperature curing agent. Preferred catalysts for this invention are imidazoles and epoxy adducts thereof, the imidazoles having the general formula: 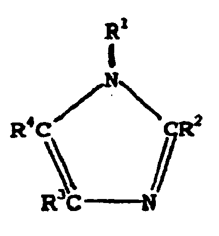 wherein R¹, R², R³, and R⁴ are independently hydrogen, alkyl, aryl, or any substituent which is not reactive with the epoxy resin. For the purposes of this invention, the term imidazole is used herein to mean both the substituted and unsubstituted imidazoles. Imidazoles, in themselves, tend to be insoluble in epoxy resins. Thus, epoxy adducts are made to make them more compatible with the epoxy system of this invention. Suitable adducts of such imidazoles with a bisphenol A epoxy resin are available commercially from Shell Chemical Company under its trademark EPON, e.g., EPON P-101, and also from Ciba-Geigy Corporation under its designation HT 261. Examples of suitable imidazoles include imidazole, 2-methyl imidazole, and 2-phenyl imidazole. For enhanced color stability, the 2-phenyl imidazole, which is available from the SWK Chemical Co., is preferred. A particularly hard surface is obtained when a combination of the ANCAMINE 2441 curing agent and 2-phenyl imidazole is used to cure an epoxy resin having a medium T_{g} and melt viscosity.

Although applicants are not bound by any theory, it is believed that an imidazole adducts to an epoxy resin by an opening of the epoxy ring that results in the epoxy oxygen bonding to the C=N bond of the imidazole ring. The adducted imidazole moves from one epoxy group to another as it facilitates epoxy ring openings and cure reactions.

A tertiary amine such as triethylamine diamine, available under the trademark ACTIRON SI 27071 from Synthron Chemicals, is another type of curing catalyst that may be used in this invention.

Various gloss levels for the cured coating may be achieved through the choice of epoxy resins, curing agents, curing catalysts and the relative amounts of each. A low gloss may be achieved, for example, by the use of a combination of dicyandiamide (a slow acting agent) and a fast acting agent to set up competitive reactions. A fused and thermally cured powder coating made from an epoxy resin having an equivalent weight of about 400 may have a 60° gloss level as low as about 10 whereas a gloss level of about 90 may be achieved when the equivalent weight is about 650 and the curing agent and curing catalyst are changed.

The coating powder may also contain a flow control agent in the range of from about 0.5 to about 2.0 phr. Examples of the flow control agents include the MODAFLOW poly(alkylacrylate) products and the SURFYNOL acetylenic diols; they may be used singly or in combination. Anti-oxidants may also be used at a concentration of from about 0.5 to about 2.0 phr to prevent the discoloration of the coatings even at the relatively low curing temperatures suitable for the purposes of this invention. Examples of the anti-oxidants that are useful in this invention include sodium hypophosphite, tris-(2,4-di-t-butyl phenyl) phosphite (sold under the trademark IRGAFOS 168), and calcium bis([monoethyl(3,5-di-t-butyl-4-hydroxybenzyl)phosphonate] (sold under the trademark IRGANOX 1425). Mixtures of anti-oxidants may be used.

The powder of this invention may be used in coating glass, ceramics, and graphite-filled composites as well as metallic substrates such as steel and aluminum. Much heat is wasted by heating thick or massive metal articles in order to raise the surface temperature to the high levels required by conventional coating powders. The particular utility of the powder of this invention, however, in the coating of heat sensitive substrates such as plastics, paper, cardboard and woods makes it highly appealing as a commercially viable alternative to the liquid coatings that have been almost universally used in the past. For the purposes of this invention, wood is defined as any lignocellulosic material whether it comes from trees or other plants and whether it be in its natural form, milled, or made into plywood, particleboard, or fiberboard of various densities. It is exemplified by lumber, panels, molding, siding, oriented strand board, hardboard, and medium density fiberboard (MDF). The particle board may be standard or treated to enhance its electrical conductivity. Wood having a moisture content of from 3 to 10 % by weight is suitable for the purposes of this invention. A porous particleboard, pre-coated with a conductive liquid coating composition and cured, may also serve as a substrate for the coating powder of this invention. For example, a smooth 51-76µm (2-3 mil) thick powder coating is achieved on a 25-50µm (0.5 to 1 mil) thick UV or thermally cured pre-coat.

Pigments, optical brighteners, fillers such as calcium carbonate and bentonite clays, texturizing agents such as particulate rubber, and other conventional additives may also be present. A particularly desirable textured finish may be obtained by the addition of from 14 to 20 phr of the rubber to the coating composition along with calcium carbonate at a rubber to carbonate ratio of from 0.7:1 to 1.5:1 by weight. Titanium dioxide, in an amount of from 5 to 50 phr or more, is an example of a pigment that may be used. An optical brightener, exemplified by 2,2'-(2,5-thiophenediyl)bis[5-t-butylbenzoxazole, sold under the trademark UVITEX OB, may be present at from 0.1 to 0.5 phr.

The coating powder of this invention may be applied by any of the conventional powder coating methods.

Flat-surfaced and grooved panels may be coated by triboelectric guns on a flat line conveyor having electrically conductive bands around the circumference of the conveyor belt. A suitable flat line powder coating apparatus comprises such a conveyor extending through a powder coating booth, wherein a wooden article supported and moved by the conveyor belt is coated triboelectrically by a plurality of guns situated adjacent one another and in one or more tiers. The article bearing the powder is then conveyed through a curing oven having several heating zones, some of which are heated by IR lamps, others by heat convection, and still others by a combination of those two. The coating and curing line speeds may be the same or different depending on the length of the curing oven. The line speed through the powder application booth may be from 1.5 to 45.7m (5 to 150 feet) per minute but it is preferably from 6.1 to 30.5m (20 to 100 feet) per minute. The line speed through the curing oven, on the other hand, may be from 1.5 to 6.1 m (5 to 20 feet) per minute, depending on the oven temperature and the particular coating powder used. The curing temperature may range from 107°C (225°F) up to but not including the decomposition temperature of the powder. It is preferred to maintain the cure temperature within the range of from 107 to 149°C (225° to 300°F) and still more preferred to keep the cure temperature at from 107 to 121°C (225 to 250°F). It is preferred that the coating and curing line speeds be adjusted to the oven length so that they are balanced.

Preheating of the panel before the coating step is preferred in some instances, e.g., to help the powder reach its flow temperature in the first zone of the oven and it also minimizes outgassing during cure. The oven may have several heating zones of the IR and convection types and also a combination of the two.

The film thickness of the cured coating is at least about 1 mil and it may be as much as about 8 mils or even higher if there is a practical need for such. Film thicknesses of from about 4 to about 6 mils are achieved regularly by the method of this invention.

The gel time of the coating powder of this invention was measured according to ASTM Specification D-3451 (14) in which a small quantity of powder was dropped onto a hot plate at 300°F (149°C) and stroked with a tongue depressor until continuous and readily breakable filaments were formed when the depressor was lifted from the sample. The elapsed time for this to occur was measured in seconds and is the gel time.

The blocking resistance of a coating powder is tested by placing about 2.54cm (1 inch) of the powder in a tube, placing a 100 gram load on top of the powder and heating it at 43°C (110°F) for 24 hours. Upon removal of the contents of the tube, the degree of sintering is measured on a scale of 1 to 10, 1 being completely free-flowing and 10 being non-flowing. Powders having a value of less than 5 are acceptable.

The hot plate melt flow (HPMF) of the powder coating composition of this invention was measured by placing a pellet of powder having a diameter of 12.7mm and 6mm thick on a hot plate set at 375°F(190 ± 2°C)at an inclination angle of 35°. When the pellet melts and runs down the plate, the length of the flow is measured in millimeters. The flow distance is dependent on the initial melt viscosity, the rate of reaction, the temperature at which the test is conducted, and the type and amount of catalyst.

The Hoffman scratch resistance of the coated articles made according to this invention was measured with the Byk-Gardner scratch tester.

The Taber abrasion resistance of the coated articles made according to this invention was measured according to ASTM D-4060 using CS-10 wheels and a 1000 gram load.

The invention is more specifically described in the following working examples wherein parts are by weight unless otherwise stated.

### REFERENCE EXAMPLES 1-3

Three resins of increasing viscosity and increasing Tg, as shown in Table A, were melt compounded with polyamine adducts and the other components shown in Table 1 in a twin screw extruder. The extrudate was cooled between water cooled rollers, broken into chips, and then ground into a powder. Powder passing through a 74µm (200 mesh) screen was electrostatically coated on cold rolled steel Q-panels and cured at 149°C (300°F) for 5 minutes to obtain a film thickness of 51 to 76µm (2-3 mils). As shown in Table 2, the superior solvent resistance and blocking resistance of Examples 1-3 demonstrates that faster cure is achieved using this technology. The extrudate temperatures and the properties of the uncured and cured powders are given in Table 2.

**TABLE A**

| **Curing agent** | **Tg °C** | **Viscosity (cps) at 150°C** |
|---|---|---|
| GT-7071 | 38 | 0.5 Pas (500) |
| GT-7072 | 54 | 1.1Pas (1100) |
| GT-7013 | 60 | 2.7 Pas (2700) |

**TABLE 1**

| Component | Example 1 | Example 2 | Example 3 |
|---|---|---|---|
| GT-7071 | 85 | | |
| GT-7072 | | 85 | |
| GT-7013 | | | 85 |
| Curing Agent * | 15 | 15 | 15 |
| Catalyst ** | 2.0 | 2.0 | 2.0 |
| Titanium Dioxide | 30.0 | 30.0 | 30.0 |
| Antioxidant *** | 1.0 | 1.0 | 1.0 |
| SURFYNOL 104S | 1.0 | 1.0 | 1.0 |
| MODAFLOW 2000 | 1.0 | 1.0 | 1.0 |
| UVITEX OB | 0.1 | 0.1 | 0.1 |

| | | | |
|---|---|---|---|
| * LMB 5218 Epoxy/Polyamine; | | | |
| ** EPON P-101 Epoxy/Imidazole; | | | |
| *** Sodium Hypophosphite | | | |

**TABLE 2**

| Properties | Example 1 | Example 2 | Example 3 |
|---|---|---|---|
| Extrudate temp | 71°C (160 °F) | 82°C (180 °F) | 93°C (200 °F) |
| Gel time(300°F) (149°C) | 30 sec | 23 sec | 22 sec |
| HPMF (375°F) (191°C) | 80 mm | 15 mm | 13 mm |
| Blocking | 2 | 2 | 2 |
| MEK Resistance | 4 | 4 | 4 |
| 60° Gloss | 88 | 56 | 50 |
| Orange Peel | Slight | Heavy | Heavy |

Table 2 shows the significant reduction in the temperature that the extrudate reaches when a low viscosity epoxy resin is used. The shorter gel times for the powders containing the more viscous resins are caused by the partial curing of the resin in the extruder at the higher temperatures.

### REFERENCE EXAMPLES 4-6

The use of non-adducted imidazoles as a curing catalyst, the practice of the invention without a curing catalyst, and the use of a high temperature curing agent in combination with a low temperature curing agent and a catalyst are illustrated by the compositions and properties thereof shown in Tables 3 and 4.

**TABLE 3**

| Component | Example 4 | Example 5 | Example 6 |
|---|---|---|---|
| GT 7071 resin | 85 | 80 | 85 |
| LMB 5218 | 15 | 20 | 15 |
| Imidazole | 2 | | |
| 2-Me-imidazole * | | | 0.2 |
| Dicyandiamide | | | 5.0 |
| TiO₂ | 30.0 | 30.0 | 30.0 |
| Antioxidant ** | 1.0 | 1.0 | 1.0 |
| SURFYNOL 104S | 1.0 | 1.0 | 1.0 |
| MODAFLOW 2000 | 1.0 | 1.0 | 1.0 |
| UVITEX OB | 0.1 | 0.1 | 0.1 |

| | | | |
|---|---|---|---|
| * Me = methyl | | | |
| ** Sodium Hypophosphite | | | |

**TABLE 4**

| Properties | Example 4 | Example 5 | Example 6 |
|---|---|---|---|
| Extrudate temp | 66°C (150°F) | - - - | 71°C (160°F) |
| Gel Time (300°F) (149°C) | 25 sec | 25 sec | 26 sec |
| HPMF (375°F) (191°C) | 150 mm | 25 mm | 38 mm |
| Blocking Resistance | 3 | 2 | 2 |
| MEK Resistance | 5 | 3-4 | 4 |
| 60° Gloss | 82 | 45 | 34 |
| Orange Peel | Slight | Moderate | Slight |

The properties of the coating powder containing imidazole as the catalyst recommend it for use where fast cures are required, as in the coating of reinforcing bars, for example; it has the best cure, as indicated by its MEK resistance, and its flow properties are extraordinarily good.

### Reference Examples 7-9

The following examples illustrate the performance of curing agents containing secondary and tertiary amino groups. The coating powder passing through a 74µm (200 mesh) screen was sprayed from a tribocharging gun onto 2.54cm (1") thick medium density fiberboard (MDF) panels which had been pre-heated in a 177°C (350°F) oven for 10 minutes to a surface temperature of 116°C (240°F). The powder coating was cured by heating the panels at 177°C (350°F) for 5 minutes to reach a surface temperature of 138°C (280°F).

**TABLE 5**

| COMPONENT | Example 7 | Example 8 | Example 9 |
|---|---|---|---|
| EPON 2042 resin | 70 | | |
| ANCAMINE 2014 AS | 20 | | |
| RSS 1407 resin | 10 | | |
| EPON P-101 | 2.0 | | |
| MODAFLOW 2000 | 1.0 | 1.0 | 1.0 |
| SURFYNOL 104S | 1.0 | 1.0 | 1.0 |
| Antioxidant * | 1.0 | 1.0 | 1.0 |
| TiO₂ | 30 | 30 | 30 |
| ANCAMINE 2441 | | 10 | 10 |
| 2-phenylimidazole | | | 2.0 |
| GT 7072 resin | | 100 | 100 |

| | | | |
|---|---|---|---|
| * Sodium hypophosphite | | | |

**TABLE 6**

| PROPERTY | Example 7 | Example 8 | Example 9 |
|---|---|---|---|
| Gel Time (300°F) (149°C) | 30 sec | 90 sec | 35 sec |
| HPMF | 43 (mm) | 90 (mm) | 75 (mm) |
| MEK Resistance | 3 | 4 | 5 |
| 60° Gloss | 35 | 60 | 95 |
| Hoffman Scratch Resistance * | 1,200 grams | 1,000 grams | 2,000 grams |
| Taber Abrasion Resistance | 36 mg | 72 mg | 69 mg |

### Reference Example 10

A two-component epoxy powder coating composition described in Example 9 of EP-A-806445 was prepared for comparison with the composition of this invention. Components A and B of the formulation shown in Table 7 are extruded separately and then ground and classified in the usual manner. Sixty-five parts by weight of Component A and 35 parts of Component B were blended to form the coating powder composition of Reference Example 10. The powder of Reference Example 1 was applied to a wooden panel that had been pre-heated to a panel temperature of 104-110°C (220-230°F) and was cured at a panel temperature of 132-138°C (270-280°F) for about 5 minutes. The properties of the cured coating are shown in Table 8.

**TABLE 7**

| Ingredient | Component A | Component B |
|---|---|---|
| GT-7072 (melt visc. 54) | 100 | --- |
| 2-phenyl imidazole | 2.0 | --- |
| MODAFLOW 2000 | 1.0 | 2.0 |
| SURFYNOL 104S | 1.0 | 30.0 |
| LMB 5218 curing agent | --- | 100 |
| Titanium Dioxide | 30.0 | 30.0 |
| Polyethylene (Grade 6A) | 2.0 | 2.0 |
| Sodium Hypophosphite | 1.0 | 1.0 |
| Optical brightener | 0.1 | 0.1 |

**TABLE 8**

| | |
|---|---|
| Gel time | 25 seconds |
| HPMF | 60 mm |
| MEK resistance | 4 |
| 60° gloss | 15 |
| Hoffman scratch resistance | 500 grams |
| Taber abrasion | 120 mg |

### Examples 11-13

The following examples (of which Example 11 is a Reference Example) illustrate the combined effects of curing agents having different rates and epoxy resins having low and high equivalent weights on the gloss of powder coatings of this invention. The coating powder passing through a 74µm (200 mesh) screen was sprayed from a tribocharging gun onto 2.5cm (1") thick medium density fiberboard (MDF) panels which had been pre-heated in a 177°C (350°F) oven for 10 minutes to a surface temperature of 116°C (240°F). The powder coating was cured by heating the panels at 177°C (350°F) for 5 minutes to reach a surface temperature of 138°C (280°F).

**TABLE 9**

| COMPONENT | Example 11 | Example 12 | Example 13 |
|---|---|---|---|
| GT-6259 resin * | 100 | 50 | 50 |
| GT-7072 resin ** | --- | 50 | 50 |
| ANCAMINE 2014 AS | 20 | 20 | 10 |
| ANCAMINE 2441 | --- | --- | 5 |
| EPON P-101 | 2.0 | 2.0 | 2.0 |
| MODAFLOW 2000 | 1.0 | 1.0 | 1.0 |
| SURFYNOL 104S | 1.0 | 1.0 | 1.0 |
| Antioxidant *** | 1.0 | 1.0 | 1.0 |
| TiO₂ | 30 | 30 | 30 |

| | | | |
|---|---|---|---|
| *Eq Wt. ∼400; | | | |
| ** Eq Wt ∼650 | | | |
| *** Sodium hypophosphite | | | |

**TABLE 10**

| PROPERTY | Example 11 | Example 12 | Example 13 |
|---|---|---|---|
| Gel Time (300°F) (149°C) | 11 sec | 11 sec | 15 sec |
| HPMF | 48 (mm) | 39 (mm) | 50 (mm) |
| MEK Resistance | sl rub off | sl rub off | sl rub off |
| 60° Gloss | 15 | 25 | 70 |
| Hoffman Scratch | 300 grams | 300 grams | 200 grams |
| Taber Abrasion | 82 mg | 64 mg | 71 mg |
| Smoothness | sl OP | sl OP | mod OP |

### Examples 14-18

Coating powders formulated as shown in Table 11 were prepared by extrusion through a die set in an extruder having a 12 pin rotor operating at 300 rpm and whose front zone is at 120°C and rear zone is cool. The extrudate is cooled chipped and ground to pass through a 74µm (200 mesh) screen. The resulting powder was sprayed electrostatically from a tribocharging gun onto 2.5cm (1") thick medium density fiberboard (MDF) panels which had been pre-heated in a 177°C (350°F) oven for 10 minutes to a surface temperature of 116°C (240°F). The powder coating was cured by heating the panels at 177°C (350°F) for 5 minutes to reach a surface temperature of 138°C (280°F). The thickness of the coating was 102-178µm (4-7 mils). Examples 14 and 15 are Reference Examples.

**TABLE 11**

| COMPONENT | Ex 14 (Ref) | Ex 15 (Ref) | Ex 16 | Ex 17 | Ex 18 |
|---|---|---|---|---|---|
| GT-6259 resin | 100 | | 50 | 50 | 50 |
| GT-7072 resin | --- | 100 | 50 | 50 | 50 |
| ANCAMINE 2014 AS | 20 | 20 | 20 | 5 | 20 |
| ANCAMINE 2441 | --- | --- | 5 | 10 | --- |
| EPON P-101 | 2.0 | 2.0 | 2.0 | 2.0 | 2.0 |
| MODAFLOW 2000 | 1.0 | 1.0 | 1.0 | 1.0 | 1.0 |
| SURFYNOL 104S | 1.0 | 1.0 | 1.0 | 1.0 | 1.0 |
| Antioxidant* | 1.0 | 1.0 | 1.0 | 1.0 | 1.0 |
| TiO₂ | 30 | 30 | 30 | 30 | 30 |

| | | | | | |
|---|---|---|---|---|---|
| * Sodium hypophosphite | | | | | |

**TABLE 12**

| PROPERTY | Ex 14 (Ref) | Ex 15 (Ref) | Ex 16 | Ex 17 | Ex 18 |
|---|---|---|---|---|---|
| Extrudate Temp | 7479°C(165-175°F) | 8288°C (180-190°F) | 7982°C (175-180°F) | 7985°C (175-185°F) | 7988°C (175-185°F) |
| Gel Time (300°F) 149°C | 11 sec | 13 sec | 11 sec | 15 sec | 16 sec |
| HPMF(mm) | 48 | 36 | 39 | 50 | 88 |
| MEK Resistance | 4+ | 4 | 4+ | 5 | |
| 60° Gloss | 15 | 26 | 25 | 70 | 17 |
| Hoffman Scratch | 300 grams | 300 grams | 300 grams | 200 grams | --- |
| Taber Abrasion | 82.2 mg | 75.9 mg | 63.7 mg | 71.4 | 54.3 |
| Smoothness | sl OP | mod OP | sl OP | mod OP | no OP |

## Claims

1. A method for preparing a one-component thermosetting coating powder which comprises extruding, at a temperature of not more than 104.5°C, (220°F), a mixture of an epoxy resin, having a melt viscosity of from 0.2 to 2.0 Pas (200 to 2000 centipoise) at 150°C, and a low temperature curing agent which is solid at 27°C (80°F) and which is an epoxy resin adduct of a polyamine, cooling the extrudate and comminuting it, **characterised in that** the epoxy resin is a mixture of one having a equivalent weight between 100 and 400 and one having an equivalent weight between 400 and 700, in a weight ratio of from 1:99 to 99:1.

2. A method according to claim 1 wherein the low temperature curing agent is an epoxy resin adduct of an aliphatic polyamine.

3. A method according to claim 1 or claim 2 wherein the curing agent is in powder form.

4. A method according to any preceding claim wherein an imidazole having the general formula: 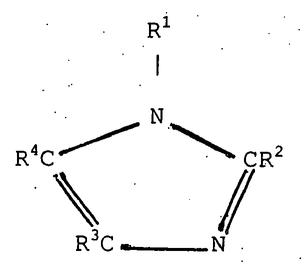 or an epoxy adduct thereof, wherein R¹, R² R³, and R⁹ are independently hydrogen or any substituent which is not reactive with the epoxy resin, is added to the extrusion mixture as a catalyst.

5. A.method according to claim 4 wherein R¹, R², R³, and R⁴ are independently hydrogen, alkyl, aryl, or alkaryl.

6. A method according claim 5 wherein R² is methyl or phenyl, and R¹, R², and R⁹ are hydrogen.

7. A method according to any preceding claim wherein from 5 to 20% by weight of the epoxy resin is crystalline.

8. A method according to claim 1 wherein one epoxy resin has an equivalent weight of about 400.

9. A method according to claim 1 wherein one epoxy resin has an equivalent weight of about 650.

10. A method according to any preceding claim wherein the extrusion temperature is from 71 to 104°C (160 to 220°F).

11. A one-component thermosetting coating powder which cures at a temperature of from 107 to 149°C (225 to 300°F) and comprises particles of an extruded mixture of an epoxy resin having a melt viscosity of from 0.2 to 2.0 Pas (200 to 2000 centipoise) at 150°C and a low temperature curing agent which is solid at about 27°C (80°F) and which is an epoxy resin adduct of a polyamine, **characterised in that** the epoxy resin is a mixture of one having an equivalent weight between 100 and 400 and one having an equivalent weight between 400 and 700 in a weight ratio of from 1:99 to 99:1.

12. A powder according to claim 11 wherein the low temperature curing agent is an epoxy resin adduct of an aliphatic polyamine.

13. A powder according to claim 12 wherein the aliphatic polyamine contains a primary amino group.

14. A powder according to claim 12 or claim 13 wherein the aliphatic polyamine contains a secondary amino group.

15. A powder according any one of claim 11 to 14 wherein the amount of curing agent is from 2 to 40 parts per hundred parts of the resin.

16. A powder according any one of claims 11 to 15 further **characterised in that** it contains an imidazole having the general formula: 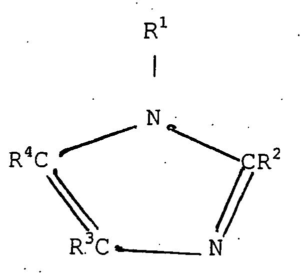 or an epoxy adduct thereof wherein R¹, R² R³, and R⁴ are independently hydrogen or any substituent which is not reactive with the epoxy resin.

17. A powder according to claim 16 wherein R¹, R², R³, and R⁴ are independently hydrogen, alkyl, aryl or alkaryl.

18. A powder according to claim 17 wherein R² is methyl or phenyl, and R¹, R³ and R⁴ are hydrogen.

19. A powder according to any one of claims 16 to 18 wherein the amount of imidazole or epoxy adduct thereof is from 0.2 to 5 parts per hundred parts of the resin.

20. A powder according to any one of claims 11 to 19 wherein one epoxy resin has an equivalent weight of about 400.

21. A powder according to any one of claims 11 to 19 wherein one epoxy resin has an equivalent weight of about 650.

22. A powder according to any one of claims 11 to 21 wherein from 5 to 20 by weight of the epoxy resin is crystalline.

23. A method for coating wood comprising electrostatically spraying a thermosetting coating powder according to any one of claims 11 to 22 onto a surface of the wood and heating the powder to a curing temperature of from 107 to 149°C (225 to 300°F).

24. An article having a thermosetting epoxy powder coating composition coated and cured thereon, which composition in powder form comprises a one-component particulate blend of :
an epoxy resin having a melt viscosity of from 0.2 to 2.0 Pas (200 to 2000 centipoise) at 150°C and
a low temperature curing agent which is solid at about 27°C (80°F) and which is an epoxy resin adduct of a polyamine, wherein the epoxy resin is a mixture of one having an equivalent weight between 100 and 400 and one having an equivalent weight between 400 and 700 in a weight ratio of 1:99 to 99:1.

25. An article according to claim 24 wherein the amount of curing agent is from 2 to 40 parts per hundred parts of the resin.

26. An article according to claim 24 or claim 25 wherein the low temperature curing agent is an epoxy resin adduct of an aliphatic polyamine.

27. An article according to claim 24 wherein one epoxy resin has an equivalent weight of about 400.

28. An particle according to claim 27 wherein one epoxy resin has an equivalent weight of about 650.

29. An article according to any one of claims 24 to 28 wherein the article is made of wood.

## Patentansprüche

1. Verfahren zur Herstellung eines hitzehärtbaren Einkomponenten-Beschichtungspulvers, bei dem man ein Gemisch eines Epoxyharzes mit einer Schmelzviskosität von 0,2 bis 2,0 Pas (200 bis 2000 Centipoise) bei 150°C und eines bei niedriger Temperatur härtenden Mittels, welches bei 27°C (80°F) fest ist und ein Epoxyharzaddukt eines Polyamins ist, bei einer Temperatur von nicht mehr als 104,5°C (220°F) extrudiert, das Extrudat kühlt und es zerkleinert, **dadurch gekennzeichnet, dass** das Epoxyharz ein Gemisch eines solchen mit einem Äquivalentgewicht zwischen 100 und 400 und eines solchen mit einem Äquivalentgewicht zwischen 400 und 700 in einem Gewichtsverhältnis von 1:99 bis 99:1 ist.

2. Verfahren nach Anspruch 1, bei dem das bei niedriger Temperatur härtende Mittel ein Epoxyharzaddukt eines aliphatischen Polyamins ist.

3. Verfahren nach Anspruch 1 oder Anspruch 2, bei dem das härtende Mittel in Pulverform vorliegt.

4. Verfahren nach einem der vorausgehenden Ansprüche, bei dem ein Imidazol der allgemeinen Formel 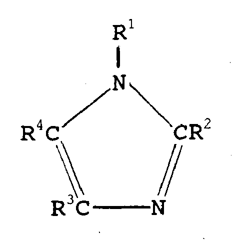 oder ein Epoxyaddukt hiervon, worin R¹, R², R³ und R⁴ unabhängig voneinander Wasserstoff oder irgendein Substituent sind, welcher nicht mit dem Epoxyharz reagiert, zu dem Extrudiergemisch als ein Katalysator zugegeben wird.

5. Verfahren nach Anspruch 4, bei dem R¹, R², R³ und R⁴ unabhängig voneinander Wasserstoff, Alkyl, Aryl oder Alkaryl sind.

6. Verfahren nach Anspruch 5, worin R² Methyl oder Phenyl ist und R¹, R³ und R⁴ Wasserstoff sind.

7. Verfahren nach einem der vorausgehenden Ansprüche, worin 5 bis 20 Gew.-% des Epoxyharzes kristallin sind.

8. Verfahren nach Anspruch 1, bei dem ein Epoxyharz ein Äquivalentgewicht von etwa 400 besitzt.

9. Verfahren nach Anspruch 1, bei dem ein Epoxyharz ein Äquivalentgewicht von etwa 650 besitzt.

10. Verfahren nach einem der vorausgehenden Ansprüche, bei dem die Extrudiertemperatur von 71 bis 104°C (160 bis 220°F) beträgt.

11. Hitzehärtbares Einkomponenten-Beschichtungspulver, das bei einer Temperatur von 107 bis 149°C (225 bis 300°F) härtet und Teilchen eines extrudierten Gemisches eines Epoxyharzes mit einer Schmelzviskosität von 0,2 bis 2,0 Pas (200 bis 2000 Centipoise) bei 150°C und ein bei niedriger Temperatur härtendes Mittel umfaßt, welches bei etwa 27°C (80°F) fest ist und welches ein Epoxyharzaddukt eines Polyamins ist, **dadurch gekennzeichnet, dass** das Epoxyharz ein Gemisch eines solchen mit einem Äquivalentgewicht zwischen 100 und 400 und eines solchen mit einem Äquivalentgewicht zwischen 400 und 700 in einem Gewichtsverhältnis von 1:99 bis 99:1 ist.

12. Pulver nach Anspruch 11, bei dem das bei niedriger Temperatur härtende Mittel ein Epoxyharzaddukt eines aliphatischen Polyamins ist.

13. Pulver nach Anspruch 12, bei dem das aliphatische Polyamin eine primäre Aminogruppe enthält.

14. Pulver nach Anspruch 12 oder Anspruch 13, bei dem das aliphatische Polyamin eine sekundäre Aminogruppe enthält.

15. Pulver nach einem der Ansprüche 11 bis 14, bei dem die Menge an Härtungsmittel 2 bis 40 Teile je 100 Teile des Harzes beträgt.

16. Pulver nach einem der Ansprüche 11 bis 15, weiterhin **dadurch gekennzeichnet, daß** es ein Imidazol der allgemeinen Formel 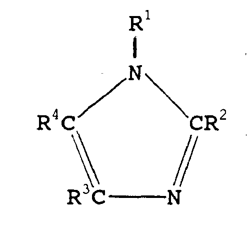 oder ein Epoxyaddukt hiervon enthält, worin R¹, R², R³ und R⁴ unabhängig voneinander Wasserstoff oder irgendein Substituent sind, welcher nicht mit dem Epoxyharz reagiert.

17. Pulver nach Anspruch 16, worin R¹, R², R³ und R⁴ unabhängig voneinander Wasserstoff, Alkyl, Aryl oder Alkaryl sind.

18. Pulver nach Anspruch 17, worin R² Methyl oder Phenyl ist und R¹, R³ und R⁴ Wasserstoff bedeuten.

19. Pulver nach einem der Ansprüche 16 bis 18, worin die Menge an Imidazol oder Epoxyaddukt hiervon 0,2 bis 5 Teile je 100 Teile des Harzes beträgt.

20. Pulver nach einem der Ansprüche 11 bis 19, worin ein Epoxyharz ein Äquivalentgewicht von etwa 400 hat.

21. Pulver nach einem der Ansprüche 11 bis 19, worin ein Epoxyharz ein Äquivalent von etwa 650 hat.

22. Pulver nach einem der Ansprüche 11 bis 21, worin 5 bis 20 Gew.-% des Epoxyharzes kristallin sind.

23. Verfahren zum Beschichten von Holz unter elektrostatischem Aufsprühen eines hitzehärtbaren Beschichtungspulvers nach einem der Ansprüche 11 bis 22 auf eine Oberfläche des Holzes und Erhitzen des Pulvers auf eine Härtungstemperatur von 107 bis 149°C (225 bis 300°F).

24. Gegenstand mit einer darauf geschichteten und gehärteten hitzehärtbaren Epoxypulverbeschichtungszusammensetzung, wobei die Zusammensetzung in Pulverform ein feinteiliges Einkomponentengemisch eines Epoxyharzes mit einer Schmelzviskosität von 0,2 bis 2,0 Pas (200 bis 2000 Centipoise) bei 150°C und eines bei niedriger Temperatur härtenden Mittels, welches bei etwa 27°C (80°F) fest ist und welches ein Epoxyharzaddukt eines Polyamins ist, umfaßt, wobei das Epoxyharz ein Gemisch eines solchen mit einem Äquivalentgewicht zwischen 100 und 400 und eines solchen mit einem Äquivalentgewicht zwischen 400 und 700 in einem Gewichtsverhältnis von 1:99 bis 99:1 ist.

25. Gegenstand nach Anspruch 24, worin die Menge an Härtungsmittel 2 bis 40 Teile je 100 Teile des Harzes beträgt.

26. Gegenstand nach Anspruch 24 oder Anspruch 25, worin das bei niedriger Temperatur härtende Mittel ein Epoxyharzaddukt eines aliphatischen Polyamins ist.

27. Gegenstand nach Anspruch 24, worin ein Epoxyharz ein Äquivalentgewicht von etwa 400 hat.

28. Gegenstand nach Anspruch 27, worin ein Epoxyharz ein Äquivalentgewicht von etwa 650 hat.

29. Gegenstand nach einem der Ansprüche 24 bis 28, worin der Gegenstand aus Holz besteht.

## Revendications

1. Procédé de préparation d'une poudre de revêtement durcissable à un composant qui comprend l'opération consistant à extruder, à une température non supérieure à 104,5°C (220°F), un mélange d'une résine époxy ayant une viscosité de masse fondue de 0,2 à 2,0 Pas (200 à 2000 centipoises) à 150°C et d'un agent durcissant aux basses températures qui est solide à 27°C (80°F) et qui est un produit de réaction d'une résine époxy avec une polyamine, à refroidir le mélange extrudé et à le broyer, **caractérisé en ce que** la résine époxy est un mélange d'une résine époxy ayant un poids équivalent compris entre 100 et 400 et d'une résine époxy ayant un poids équivalent compris entre 400 et 700 dans un rapport en poids de 1:99 à 99:1.

2. Procédé selon la revendication 1 dans lequel l'agent durcissant aux basses températures est un produit de réaction d'une résine époxy avec une polyamine aliphatique.

3. Procédé selon la revendication 1 ou la revendication 2 dans lequel l'agent durcissant est sous forme de poudre.

4. Procédé selon l'une quelconque des revendications précédentes dans lequel un imidazole de formule générale : 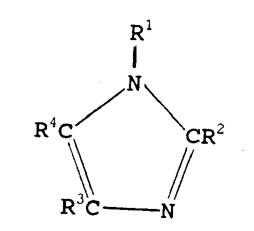 ou un produit de réaction d'époxy avec celui-ci, dans lequel R¹, R², R³, et R⁴ sont indépendamment un hydrogène ou un quelconque substituant qui n'est pas réactif avec la résine époxy, est ajouté au mélange d'extrusion comme catalyseur.

5. Procédé selon la revendication 4, dans lequel R¹, R², R³, et R⁴ sont indépendamment un hydrogène, un groupe alkyle, un groupe aryle, ou un groupe alkaryle.

6. Procédé selon la revendication 5, dans lequel R² est un groupe méthyle ou un groupe phényle, et R¹, R³ et R⁴ sont des hydrogènes.

7. Procédé selon l'une quelconque des revendications précédentes dans lequel 5 à 20 % en poids de la résine époxy est cristallisée.

8. Procédé selon la revendication 1 dans lequel une résine époxy a un poids équivalent de 400 environ.

9. Procédé selon la revendication 1 dans lequel une résine époxy a un poids équivalent de 650 environ.

10. Procédé selon l'une quelconque des revendications précédentes dans lequel la température d'extrusion est comprise dans la plage allant de 71 à 104°C (160 à 220°F).

11. Poudre de revêtement durcissable à un composant qui se durcit à une température allant de 107 à 149°C (225 à 300°F) et qui comprend des particules d'un mélange extrudé d'une résine époxy ayant une viscosité de masse fondue allant de 0,2 à 2,0 Pas (200 à 2000 centipoises) à 150°C et un agent durcissant aux basses températures qui est solide à 27°C (80°F) et qui est un produit de réaction d'une résine époxy avec une polyamine, **caractérisée en ce que** la résine époxy est un mélange d'une résine époxy ayant un poids équivalent compris entre 100 et 400 et d'une résine époxy ayant un poids équivalent compris entre 400 et 700 dans un rapport en poids de 1:99 à 99:1.

12. Poudre selon la revendication 11 dans laquelle l'agent durcissant aux basses températures est un produit de réaction d'une résine époxy avec une polyamine aliphatique.

13. Poudre selon la revendication 12 dans laquelle la polyamine aliphatique contient un groupe amino primaire.

14. Poudre selon la revendication 12 ou la revendication 13 dans laquelle la polyamine aliphatique contient un groupe amino secondaire.

15. Poudre selon l'une quelconque des revendications 11 à 14 dans laquelle la quantité de l'agent durcissant est comprise dans la plage allant de 2 à 40 parties pour 100 parties de la résine.

16. Poudre selon l'une quelconque des revendications 11 à 15 **caractérisée en outre en ce qu'**elle contient un imidazole de formule générale : 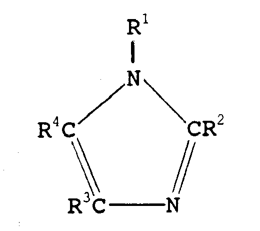 ou un produit de réaction d'une résine époxy avec celui-ci, dans laquelle R¹, R², R³, et R⁴ sont indépendamment un hydrogène ou un quelconque substituant qui n'est pas réactif avec la résine époxy.

17. Poudre selon la revendication 16, dans laquelle R¹, R², R³, et R⁴ sont indépendamment un hydrogène, un groupe alkyle, un groupe aryle, ou un groupe alkaryle.

18. Méthode selon la revendication 17, dans laquelle R² est un groupe méthyle ou un groupe phényle, et R¹, R³, et R⁴ sont des hydrogènes.

19. Poudre selon l'une quelconque des revendications 16 à 18 dans laquelle la quantité d'imidazole ou du produit de réaction de l'époxy avec celui-ci est comprise dans la plage allant de 0,2 à 5 parties pour 100 parties de la résine.

20. Poudre selon l'une quelconque des revendications 11 à 19 dans laquelle une résine époxy a un poids équivalent de 400 environ.

21. Poudre selon l'une quelconque des revendications 11 à 19 dans laquelle une résine époxy a un poids équivalent de 650 environ.

22. Poudre selon l'une quelconque des revendications 11 à 21 dans laquelle 5 à 20 % en poids de la résine époxy est cristallisée.

23. Procédé pour revêtir du bois comprenant la pulvérisation de manière électrostatique d'une poudre de revêtement durcissable selon l'une quelconque des revendications 11 à 22 sur une surface du bois et pour chauffer la poudre à une température de durcissement allant de 107 à 149°C (225 à 300°F).

24. Article ayant une poudre de composition de revêtement à base d'une poudre époxy durcissable déposée et durcie sur celui-ci, dont la composition sous forme de poudre comprend un mélange particulaire à un seul composant : d'une résine époxy ayant une viscosité de masse fondue de 0,2 à 2,0 Pas (200 à 2000 centipoises) à 150°C et d'un agent durcissant aux basses températures qui est solide à environ 27°C (80°F) et qui est un produit de réaction d'une résine époxy avec une polyamine, dans lequel la résine époxy est un mélange d'une résine époxy ayant un poids équivalent compris entre 100 et 400 et d'une résine époxy ayant un poids équivalent compris entre 400 et 700 dans un rapport en poids de 1:99 à 99:1.

25. Article selon la revendication 24 dans lequel la quantité d'agent durcissant est dans la plage allant de 2 à 40 parties pour 100 parties de la résine.

26. Article selon la revendication 24 ou la revendication 25 dans lequel l'agent durcissant aux basses températures est un produit de réaction d'une résine époxy avec une polyamine aliphatique.

27. Article selon la revendication 24 dans lequel une résine époxy a un poids équivalent de 400 environ.

28. Article selon la revendication 27 dans lequel une résine époxy a un poids équivalent de 650 environ.

29. Article selon l'une quelconque des revendications 24 à 28 dans lequel l'article est fait de bois.
